# EUROPEAN PATENT APPLICATION

(11) **EP 1 722 135 A2**
(43) Date of publication of application: **15.11.2006**
(21) Application number: 06252291.7
(22) Date of filing: 28.04.2006
(51) Int. Cl.: F16J 15/32

(54) **Abradable and/or abrasive coating and brush seal configuration**

(30) Priority: 04.05.2005 US 121052
(71) Applicant: General Electric Company, Schenectady, NY 12345 (US)
(72) Inventor: Kowalczyk, Mark W., Amsterdam, New York 12010 (US); Rivas, Flor D.C., Clifton Park, New York 12065 (US); Couture, Bernard A., Schenectady, New York 12303 (US)
(74) Representative: Bedford, Grant Richard

(57) **Abstract**

An abradable coating and/or an abrasive coating applied to the rotor (11) of a steam or gas turbine allows the temperature and pressure drop capabilities of conventional brush seal assemblies to be increased. The pressure drop capability of brush seals is closely related to fence height (22), *i.e.,* the distance between the rotor (11) and the bottom edge of the backing plate (15) supporting the brush seal wire bristles (12). Application of the abradable or abrasive coating allows the fence height to be reduced and the pressure capability of a brush seal assembly increased commensurately because the risk of the backing plate (15) rubbing against the surface (13) of the rotor (11), so as to cause damage to the rotor (11), is reduced. In addition, the backing plate (15) can be made from a higher strength material that can withstand higher temperatures because any contact between the backing plate (15) and the rotor (11) results in no damage to the rotor (11), but rather a gradual reduction of the backing plate (15) as it wears.

## Description

The present invention relates to turbines, and more particularly, to the use of an abradable coating and/or an abrasive coating with turbine brush seals to increase their pressure drop and temperature capabilities.

Turbine brush seals are contacting seals which typically include a highly flexible seal pack that consists of thousands of wire bristles that continuously adapt to the moving surface of a turbine rotor. Typically, the wire bristles are made from a collection of very fine metal bristles that form a curtain to produce a seal, yet are sufficiently compliant to withstand movement of the rotor. Typically, the bristles have low wear rates.

Currently, brush seals are applied to high pressure (HP), intermediate pressure (IP), low pressure (LP) and end packing regions of single-flow and opposed-flow combined rotors. However, the application of brush seals to such regions is limited by the backing-plate bending stress and bristle-bending stress capabilities of the brush seal assembly.

One of the limitations precluding the use of brush seals in applications having higher temperatures and higher pressure drops is the materials currently available for backing plates and bristles. Another is the fence height required when dealing with backing plates made from materials with limited bending stress. Height is the distance between a turbine rotor and the bottom edge of a backing plate. One difficulty in using a higher strength brush backing plate that withstands higher temperatures is the damage that would result to a rotor as a consequence of contact between the rotor and the higher strength backing plate. Nevertheless, because of the operating advantages provided by brush seals, it would be desirable to use brush seals where high temperature and high pressure drops are normally observed.

Various embodiments of the present invention use the application of an abradable coating and/or an abrasive coating to the surface of the rotor of a steam or gas turbine so as to increase the temperature and pressure capabilities of conventional brush seals. The combination of an abradable coating or an abrasive coating with a brush seal assembly results in a seal configuration that can withstand severe conditions in steam and gas turbines. The coatings of various embodiments of the present invention are suitable for high temperature environments, and serve to increase the pressure drop capability of conventional brush seals. The pressure capability of brush seals is closely related to fence height. In various embodiments of the present invention, the risk of rubbing a backing plate against a rotor so as to cause damage to the rotor is reduced by applying the abradable or abrasive coating. Application of the abradable or abrasive coating allows fence height to be reduced, and thus, the pressure drop and temperature capability of a brush seal increased commensurately. As the fence height is reduced, the bristle bending stress will also be reduced, giving the brush seal the capability to withstand higher pressure drops and temperatures. The other benefit is that higher strength materials can be used for the backing plate without being in risk of damaging the rotor. The abradable or abrasive coating also protects the rotor. The higher strength materials for the backing plate also assist the brush in withstanding higher pressures and temperatures.

Various aspects and embodiments of the invention will now be described with reference to the accompanying drawing, in which:

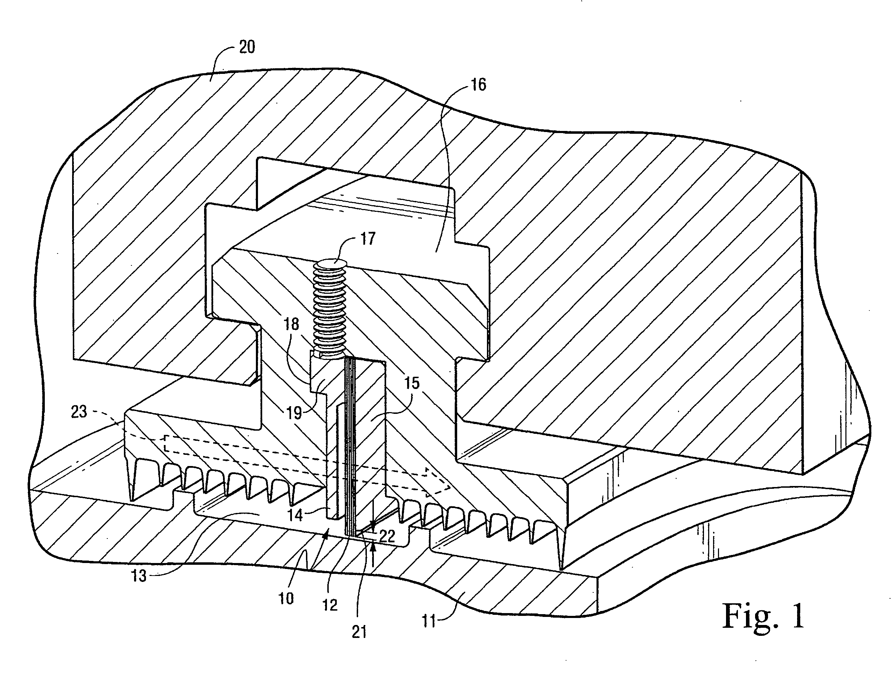

FIGURE 1 is a cross-sectional, perspective view showing a brush holder assembly engaging the rotor of a turbine and being mounted within a packing ring and packing holder or casing within a turbine.

FIGURE 1 is a cross-sectional, perspective view showing a brush holder assembly 10 engaging a rotor 11 of a turbine (not shown). The brush holder assembly 10 includes a plurality of wire bristles 12 engaging a surface 13 of rotor 11. Bristles 12 are positioned between a front plate 14 and a backing plate 15, which provides support for bristles 12. Bristles 12, front plate 14, and backing plate 15, which comprise brush holder assembly 10, are welded together on top. They are mounted within a packing ring 16, and held within ring 16 by a set screw 17 which urges a shoulder 18 of front plate 14 against an indentation 19 in packing ring 16 designed to accommodate shoulder 18. Packing ring 16 is, in turn, supported by a packing holder 20 mounted within the turbine.

Brush holder assembly 10 is urged against surface 13 of rotor 11 by a spring assembly (not shown) exerting a positive force against assembly 10 in the direction of rotor 11. The distance between surface 13 of rotor 11 and the bottom edge 21 of backing plate 15 is the "fence height" 22 of brush holder assembly 10. In time, fence height 22 will be diminished as a result of wire bristles 12 rubbing against surface 13 of rotor 11 and wearing down as rotor 11 rotates during operation. Eventually, bottom surface 21 of backing plate 15 will contact surface 13 of rotor 11, as a result of wire bristles 12 wearing away. At this point, bottom edge 21 of backing plate 15 has the potential to damage surface 13 of rotor 11 as it rubs against surface 13.

During operation of rotor 11, steam or air (depending on whether the turbine is a steam or gas turbine) moves, as shown in Figure 1, from the left side to the right side of brush assembly 10. This movement of steam or air, which is indicative of the pressure drop experienced by brush assembly 10, is depicted as arrow 23 shown in Figure 1.

To reduce the risk of damage to rotor 11 resulting from backing plate 15 rubbing against surface 13 of rotor 11, the embodiment shown uses an abradable coating or an abrasive coating that is applied to the surface 13 of rotor 11. The application of either of these coatings to surface 13 serves to protect surface 13 to prevent damage to it in an instance where backing plate 15 rubs against surface 13. The application of the abrasive or abradable coating to surface 13 of rotor 11 allows fence height 22 to be reduced. In addition, a higher strength brush backing plate 15 that withstands higher temperatures can be used because the contact between plate 15 and surface 13 of rotor 11 results in no damage to the rotor, but rather a gradual reduction of backing plate 15 as it wears.

Reduction in fence height 22 effectively allows a greater percentage of wire bristles 12 to be supported by backing plate 15, which will then have a longer length as a consequence of the reduced distance between plate 15 and rotor 11. The higher strength material used for plate 15 provides further support for wire bristles 12. Preferably, the backing plate provides support for approximately seventy-five percent of the length of the wire bristles. The result is the ability of the wire brush assembly 10 to withstand an increase in pressure drop capability and a suitability for higher temperature environments because of the greater support provided to bristles 12 by a longer backing plate 15 made from a stronger material.

Materials for backing plates are well known to those skilled in the art. Exemplary materials consist of austenitic stainless steel, ferritic stainless steel, a nickel based super-alloy, a cobalt based super-alloy, a polymeric material and combinations thereof. One example of a preferred stainless steel material would be 409SS.

When an abrasive coating is applied to surface 13 of rotor 11, contact between backing plate 15 and surface 13 of rotor 11 results in backing plate 15 being worn, rather than surface 13 of rotor 11 being damaged. When an abradable coating is applied to surface 13 of rotor 11, contact between backing plate 15 and surface 13 of rotor 11 results in the abradable coating being worn, rather than surface 13 of rotor 11 being damaged.

The abradable coating can be plasma sprayed or flame sprayed onto surface 13 of rotor 11, depending on the type of material used. A heat treatment may also be appropriate with the application of the material, again, depending on the particular abradable material used. Materials for abradable coatings are well known to those skilled in the art, such as those described in U.S. Patent No. 6,547,522 and U.S. Patent Application Publication No. US 2004/0126225, the contents of which are incorporated herein by reference. Such coatings are considered exemplary materials for the preferred embodiment.

The abrasive coating can be plasma sprayed or flame sprayed onto surface 13 of rotor 11, depending on the type of material used. A heat treatment may also be appropriate with the application of the material, again, depending on the particular abrasive coating used. Exemplary abrasive coatings 80 include alumina, chromium carbide and stellite.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

### Parts List

Brush Holder Assembly (10)
Rotor (11)
Wire Bristles (12)
Surface (13)
Front Plate (14)
Backing Plate (15)
Packing Ring (16)
Set Screw (17)
Shoulder (18)
Indentation (19)
Bottom Edge (21)
Fence Height (22)
Arrow (23)
Abrasive Coatings (80)

## Claims

1. A. brush seal arrangement for a turbine including a brush holder assembly (10) engaging a rotor (11) of the turbine, the brush holder assembly (10) comprising:
a plurality of wire bristles (12) engaging a surface (13) of the rotor (11);
a backing plate (15) positioned on a first side of the wire bristles (12), the backing plate (15) providing support for almost all of the length of the wire bristles (12);
a front plate (14) positioned on a second side of the wire bristles (12), the wire bristles (12) being positioned between the backing plate (15) and the front plate (14); and
at least one of an abradable coating and an abrasive coating applied to a surface (13) of the rotor (11), whereby application of the coating allows fence height (22) to be reduced by serving to protect the surface (13) of the rotor from damage in an instance where the backing plate (15) rubs against the rotor (11).

2. The brush seal arrangement of claim 1, whereby application of the abrasive or abradable coating further allows the backing plate (15) to be made from a higher strength material that withstands temperatures greater than 950°F.

3. The brush seal arrangement of claim 1 or claim 2, wherein an abradable coating is applied to the surface (13) of the rotor (11), whereby contact between the backing plate (15) and the surface (13) of the rotor (11) results in the abradable coating being worn, rather than in damage to the surface (13) of the rotor (11).

4. The brush seal arrangement of any preceding claim, wherein an abrasive coating is applied to the surface (13) of the rotor (11), whereby contact between the backing plate (15) and the surface (13) of the rotor (11) results the backing plate (15) being worn, rather than in damage to the surface (13) of the rotor (11).

5. The brush seal arrangement of claim 2 or any claim dependent thereon, wherein the backing plate (15) is made from a material selected from the group consisting of austenitic stainless steel, ferritic stainless steel, nickel based superalloy, cobalt based superalloy, polymeric material and combinations of said materials.

6. The brush seal arrangement of any preceding claim, wherein the abrasive coating is sprayed on.

7. The brush seal arrangement of any preceding claim, wherein the abrasive coating is made from a material selected from the group consisting of alumina, chromium carbide and satellite.

8. The brush seal arrangement of any preceding claim, wherein the abradable coating is sprayed on.

9. The brush seal arrangement of any preceding claim, wherein the abrasive coating is made from a metallic material.

10. The brush seal arrangement of any preceding claim, wherein the abradable coating is made from a metallic material.
